# FASCICULE DE BREVET EUROPEEN

(11) **EP 2 197 571 B1**
(45) Date de publication et mention de la délivrance du brevet: **04.05.2016**
(21) Numéro de dépôt: 08857975.0
(22) Date de dépôt: 15.09.2008
(51) Int. Cl.: B01J 8/00, B01J 8/02, B01J 8/12, B01J 37/18, F26B 17/12

(54) **REACTEUR EN LIT FIXE A COUCHES MINCES POUR LE TRAITEMENT CHIMIQUE DE SOLIDE CATALYTIQUE FINEMENT DIVISE**
DÜNNFILM-FESTBETTREAKTOR ZUR CHEMISCHEN BEARBEITUNG EINES FEIN GETEILTEN KATALYTISCHEN FESTSTOFFS
THIN-FILM FIXED BED REACTOR FOR THE CHEMICAL TREATMENT OF A FINELY DIVIDED CATALYTIC SOLID

(30) Priorité: 10.10.2007 FR 0705776
(43) Date de publication de la demande: 23.06.2010
(73) Titulaire: IFP Énergies nouvelles, 92852 Rueil-Malmaison Cedex (FR); ENI S.p.A., 00144 Rome (IT)
(72) Inventeur: DOUZIECH, Damien, F-92500 Rueil Malmaison (FR); CAUSSE, Gilles, F-30100 Ales (FR); CAPRANI, Eric, F-75012 Paris (FR); VIGUIE, Jean-Christophe, F-69006 Lyon (FR); SCHWEITZER, Jean-Marc, F-38200 Villette de Vienne (FR); FORRET, Ann, F-69420 Longes (FR)
(86) Numéro de dépôt international: PCT/FR2008/001287
(87) Numéro de publication internationale: WO 2009/071758

(56) Documents cités:
- EP-A- 0 872 277
- WO-A-03/001131
- WO-A-2005/009608
- US-A- 5 916 531

## Description

### DOMAINE DE L'INVENTION

La présente invention concerne un réacteur en lit fixe à couches minces destiné à la mise en oeuvre de réactions de traitement chimique, d'oxydation ou de réduction de solides divisés ( extrudés, billes ou poudres) utilisés en tant que catalyseurs ou précurseurs de catalyseurs dans des procédés de raffinage ou de pétrochimie.

Plus particulièrement, la présente invention peut être appliquée à la réduction par l'hydrogène du catalyseur de synthèse Fischer Tropsch à base de cobalt pour utilisation en phase liquide.

Le catalyseur de synthèse Fischer Tropsch est généralement constitué de fines particules solide de diamètre compris entre 30 et 100 micromètres (ou microns noté µm dans la suite du texte).

Ledit catalyseur se trouve généralement sous sa forme oxyde (Co₃O₄) à l'issue de sa synthèse. Il convient donc de réaliser une étape de réduction avant la mise en oeuvre du catalyseur dans le réacteur de synthèse Fischer Tropsch.

Cette étape de réduction est réalisée au moyen d'un gaz réducteur qui est de l'hydrogène pur ou dilué dans un gaz inerte.

La présente invention concerne un réacteur permettant d'effectuer ladite étape de réduction du catalyseur dans des conditions optimales vis à vis du temps de séjour du gaz réactif, de la perte de charge et de la manutention du solide à traiter.

### EXAMEN DE L'ART ANTERIEUR

L'art antérieur dans le domaine des réacteurs de préparation et de traitement des catalyseurs dépend principalement de la granulométrie du solide à traiter. De manière générale, lorsque le solide à traiter se présente sous forme de particules de l'ordre du millimètre, les réacteurs sont de type à lit fixe ou quelque fois en lit mobile. On entend par lit mobile un lit de particules en écoulement lent, de l'ordre du mètre par heure, avec des déplacements relatifs entre particules relativement limités.

Lorsque la granulométrie des particules atteint des valeurs de l'ordre de la centaine de microns, on utilise généralement des réacteurs à lit fluidisé, c'est à dire des réacteurs dans lesquels les particules sont dissociées et mises en mouvement les unes par rapport aux autres au moyen d'un fluide de fluidisation traversant le lit de bas en haut.

Les lits fluidisés sont connus de l'homme du métier pour leur propriété de mélangeage et de transfert de chaleur, ce qui les rend particulièrement intéressants pour la mise en oeuvre de réactions exothermiques ou endothermiques. En revanche, en fonction des vitesses de fluidisation pratiquées, ils nécessitent généralement des systèmes de séparation gaz solide plus ou moins complexes situés en aval du lit et éventuellement un système de recyclage des particules solide à l'intérieur du lit.

Étant donné la granulométrie du solide à traiter, comprise entre 30 et 100 microns, l'art antérieur consiste en un réacteur à lit fluidisé, le gaz réactif servant également de gaz de fluidisation.

Or un réacteur en lit fluidité n'est pas très bien adapté à la réaction de réduction à l'hydrogène du catalyseur de synthèse Fischer Tropsch. En effet, les réacteurs à lits fluidisés sont bien connus pour leur propriété de mélange et d'homogénéité du fait du mouvement des particules solides qui sont en moyenne (dans le temps et dans l'espace) au contact avec la même phase gaz.

De plus, dans le cas d'un lit fluide, la dilution du réactif par un gaz inerte qui participe à la fluidisation, est très vite limitée par la vitesse d'entraînement des particules de solide les plus petites.

Dans le cas de la réaction de réduction à l'hydrogène du catalyseur de synthèse F.T. un autre phénomène est à prendre en compte: la réaction de réduction à l'hydrogène s'accompagne d'une libération d'eau dont la pression partielle dans l'effluent réactionnel augmente au fur et à mesure de l'avancement de la réaction. Or il est connu de l'homme de l'art que cette pression partielle d'eau a une action inhibitrice sur la réduction.

Un réacteur en lit fixe, fonctionnant en régime proche du régime piston, présente dans ces conditions un gradient de concentration en vapeur d'eau croissant depuis l'entrée jusqu'à la sortie du réacteur en suivant l'ensemble des couches de solide à traiter. Il est donc mieux adapté qu'un réacteur en lit fluidisé puisque les premières couches de solide verront une pression partielle d'eau beaucoup plus faible que les dernières couches.

D'autre part, la pression partielle d'eau peut être maintenue aisément au dessous d'une valeur maximale, ladite valeur maximale étant atteinte sur les dernières couches de solide, en calculant correctement la dilution de l'hydrogène dans le mélange réactif en entrée.

Par ailleurs, le présent réacteur cherche à réaliser un rapport DP/z/Ps compris entre 0,1 m⁻¹ et 10 m⁻¹, et préférentiellement compris entre 0,5 m⁻¹ et 5 m⁻¹.

Dans cette expression DP représente la perte de charge à la traversée du lit, z l'épaisseur du lit, et Ps désigne la pression en sortie du lit.

Un rapport DP/z/Ps élevé, permet d'augmenter la vitesse du gaz en sortie de lit par rapport à celle de l'entrée, ce qui conduit à une évacuation plus rapide de l'eau formée le long du lit, en particulier sur les dernières couches. D'un autre côté, la valeur de ce rapport doit être limitée pour ne pas conduire à une perte de charge trop élevée.

Le rapport optimum peut être obtenu en ajustant la pression en sortie de lit (Ps) et l'épaisseur de lit (z) et se situe dans l'intervalle 0,1 m⁻¹ à 10 m⁻¹, et préférentiellement dans l'intervalle allant de 0,5 m⁻¹ à 5 m⁻¹.

Enfin, les réacteurs en lits fluidisés peuvent dans certains cas présenter des difficultés dans la bonne distribution du gaz, sauf à utiliser des systèmes de distribution fortement consommateur en perte de charge.

Dans le cas des lits fixes, du fait de la faible taille des particules, la limite en perte de charge admissible à la traversée du lit est rapidement atteinte, d'où d'une part une limitation sur l'épaisseur de la couche de solide à traiter, et d'autre part la recherche de système de distribution peu consommateur de perte de charge.

Le réacteur de traitement du catalyseur selon la présente invention est donc un réacteur en lit fixe, à couche mince, ce qui signifie que la couche de particules à traverser a une épaisseur limitée en raison des pertes de charge. Cette épaisseur est comprise entre 100 et 200 mm.

Le réacteur selon l'invention a de plus une conception modulaire, c'est à dire qu'il est constitué de plusieurs modules similaires, fonctionnant en parallèle, chaque module comportant au moins une couche mince, et le plus souvent deux couches minces d'épaisseurs identiques.

Les différents modules sont dits similaires au sens de la forme, mais pourront avoir des tailles différentes tout en respectant la similarité de forme. C'est ce qui est entendu dans l'expression "modules similaires". Dans certains cas particuliers, les modules peuvent avoir la même taille et seront donc identiques.

Lesdits modules sont enfermés dans une enceinte commune constituant l'enveloppe du réacteur.

Le réacteur selon la présente invention a une configuration dite plane dans laquelle les couches minces ont une forme parallélépipédique.

Le réacteur comprend donc une enveloppe externe enfermant un ensemble de modules similaires, chaque module possédant un système de distribution du fluide réactif destiné à assurer une distribution la plus homogène possible sur le module considéré, un système de collecte des effluents après la traversée dudit module, un système d'admission du solide à traiter à l'intérieur du module, et un système d'évacuation du solide traité vers l'extérieur du module. Certains de ces différents systèmes peuvent être commun à plusieurs modules.

Dans la plupart des cas les modules constituant le réacteur auront au moins en commun un des 4 systèmes d'introduction ou de distribution des fluides et de collecte ou d'évacuation du solide.

Dans le cadre de la présente invention, toutes les combinaisons de systèmes en commun entre modules peuvent être envisagées, mais la combinaison préférée est celle dans laquelle chaque module possède 2 couches minces, 2 systèmes de distribution du fluide réactif, l'un des deux système de distribution du fluide réactionnel étant commun avec le module voisin, un système de collecte de l'effluent réactionnel, un système d'admission du solide alimentant chaque couche mince, et un système d'évacuation du solide traité commun à tous les modules.

Dans une telle configuration, le réacteur peut fonctionner avec un nombre réduit de modules si certains d'entre eux doivent être mis hors service pour des opérations de maintenance ou tout autre raison.

Par ailleurs, le réacteur selon l'invention a un fonctionnement discontinu correspondant à des quantités de solide traité par module comprise entre 30 kg et 2500 kg, préférentiellement comprise entre 50 kg et 1000 kg, et de manière encore préférée comprise entre 100 kg et 500 kg.

Le nombre de modules fonctionnant en parallèle est généralement compris entre 2 et 20, et préférentiellement compris entre 4 et 12.

Le document WO 03/001131 décrit un réacteur comportant une multiplicité de couches de solide traversées latéralement par un gaz.

Ce réacteur peut être utilisé pour la réduction de la teneur en eau de charbon destiné à une utilisation en centrale électrique. Aucune dimension de ce réacteur n'est communiquée dans le document cité.

### DESCRIPTION SOMMAIRE DES FIGURES

Les figures la et 1b correspondent à une vue en coupe (la) et une vue en perspective (1b) d'un réacteur à un module selon l'invention dans laquelle on voit en hachuré les couches minces de solide à traiter. Le module a une géométrie plane.

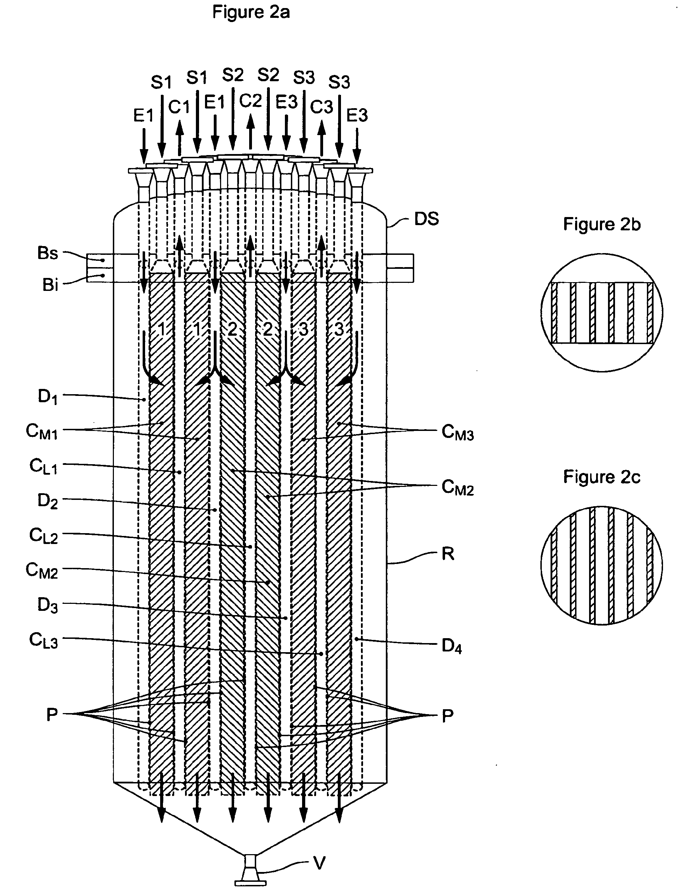

La figures 2a correspond à une vue en coupe d'un réacteur selon l'invention en géométrie plane, comprenant 3 modules. La figure 2b donne une vue de dessus de ce même réacteur avec des modules de taille identique. La figure 2c donne une vue de dessus de ce réacteur avec des modules de taille différente.

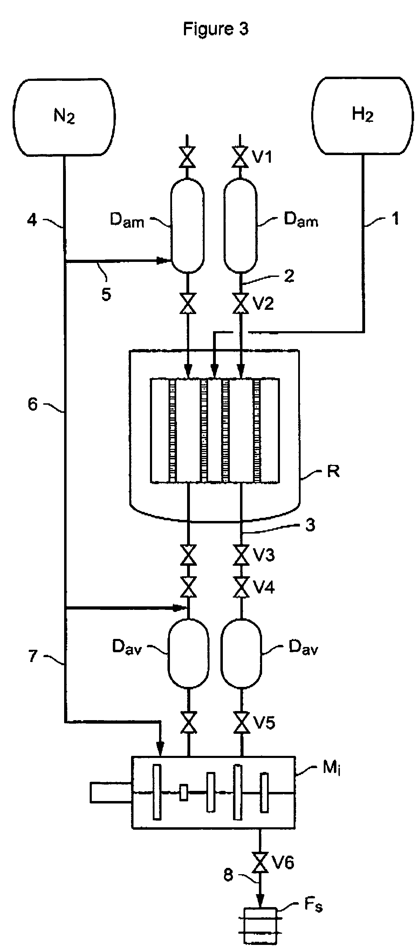

La figure 3 correspond à un schéma de l'ensemble de l'unité comprenant en amont du réacteur selon l'invention des doseurs amont, et en aval du réacteur selon l'unité des doseurs aval. Cette figure permet également de visualiser les vannes V1, V2, V3, V4 , V5, V6 qui permettent le fonctionnement en discontinu dudit réacteur.

### DESCRIPTION SOMMAIRE DE L'INVENTION

La présente invention consiste en un réacteur destiné à effectuer un traitement chimique ou thermique sur des particules solides de diamètre compris entre 30 et 500 microns.

Plus particulièrement, une application du réacteur selon l'invention concerne l'étape de réduction à l'hydrogène d'un catalyseur de synthèse Fischer Tropsch. Ce catalyseur est généralement un catalyseur à base de cobalt (supporté ou non) qui se présente sous la forme de fines particules dont le diamètre est compris entre 30 et 100 microns.

Une autre application du réacteur selon la présente invention concerne la réduction des catalyseurs à base de métaux noble utilisé dans les procédés de reformage de coupes de type essence d'intervalle de distillation compris entre 80°C et 300°C.

Une autre application possible du réacteur selon l'invention concerne le séchage de poudre, telles que des particules de catalyseur de craquage catalytique, de diamètre compris entre 30 et 300 microns.

Le réacteur selon la présente invention comprend un ensemble de modules, fonctionnant en parallèle, la disposition des différentes modules au sein du réacteur constituant un élément caractéristique du réacteur.

Le réacteur selon la présente invention présente une configuration plane dans laquelle les modules ont une forme parallélépipédique.

Le réacteur selon l'invention comprend une enveloppe externe enfermant un ensemble de modules, chaque module ayant un système de distribution du fluide réactif et de collecte des effluents, ainsi qu'un système d'admission et d'évacuation du solide. Certains de ces systèmes de distribution ou de collecte des fluides et d'admission ou d'évacuation du solide peuvent être communs à plusieurs modules.

Le système de distribution du fluide réactif est destiné à assurer une distribution la plus homogène possible sur chacun des modules. Les systèmes de distribution du fluide réactif et de collecte des effluents sont en outre calculés pour avoir la perte de charge la plus faible possible.

Par ailleurs, le réacteur selon l'invention a un fonctionnement discontinu correspondant à des quantités de solide traité comprises entre 30 kg et 2500 kg, préférentiellement comprises entre 50 kg et 1000 kg, et de manière encore préférée comprise entre 100 kg et 500 kg par module.

La description sommaire qui suit est faite au moyen des figures la et 1b.

La présente invention consiste donc en un réacteur en lit fixe à couches minces constitué d'un ensemble de modules (M) similaires, fonctionnant en parallèle, enfermés dans une enceinte commune (R) constituant l'enveloppe du réacteur.

Le traitement chimique effectué sur le catalyseur au moyen du réacteur selon l'invention est généralement appelé réduction par l'homme du métier, et fait appel à un gaz réactif contenant de l'hydrogène, l'autre composant étant un gaz inerte, généralement de l'azote.

Le niveau de dilution à l'azote peut être quelconque, mais le niveau de dilution préféré est situé entre 25% et 35% en volume d'azote dans le mélange.

L'hydrogène utilisé a généralement une teneur maximale en oxygène de 50 ppm, préférentiellement inférieure à 10 ppm, de manière encore préférée inférieure à 2 ppm.

L'hydrogène utilisé a généralement une teneur en CO inférieur à 50 ppm, préférentiellement inférieure à 10 ppm, de manière encore préférée inférieure à 1 ppm, et une teneur en CO2 inférieure à 1000 ppm, préférentiellement inférieure à 150 ppm, et de manière encore préférée inférieure à 20 ppm.

Il est possible d'admettre dans l'hydrogène une certaine quantité d'hydrocarbures légers à nombre d'atomes de carbone allant de 1 à 4, généralement du méthane. Leur teneur maximale est inférieure à 15 % en volume, de préférence inférieure à 5 % volume, et de manière plus préférée inférieure à 1 % volume.

Le point de rosée de l'hydrogène est généralement compris entre -60°C et 0° C, de manière préférée compris entre -50°C et -30°C, et de manière encore préférée compris entre -50°C et-40°C.

De manière préférée, avant sa dilution à l'azote, on utilise de l'hydrogène à haute pureté (99,95%). Un réacteur (R) tel que représenté sur la figure la représente un module de géométrie plane correspondant à des capacités de traitement pouvant aller jusqu'à environ 500 kg de solide.

Il est constitué d'un ensemble comportant:
- une enveloppe externe (R),
- une enveloppe (P) parallélépipédique, poreuse sur deux faces parallèles et opposées, enfermant la couche mince (CM) de particules à traiter et possédant des moyens de communication avec l'extérieur du réacteur pour l'admission du solide (S), et des moyens distincts des précédents pour son évacuation de la dite enveloppe (P),
- au moins un diffuseur (D) de gaz réactif attenant à la face poreuse externe de l'enveloppe (P),
- au moins un collecteur (CL) de l'effluent réactionnel attenant à la face poreuse interne de l'enveloppe (P),
- au moins une tubulure d'admission (E) du gaz réactif dans le diffuseur (D), communiquant avec l'extérieur du réacteur,
- au moins une tubulure de récupération (C) des effluents réactionnels issus du collecteur (CL) communiquant avec l'extérieur du réacteur,
- au moins une tubulure d'admission (S) du solide à traiter à l'intérieur de l'enveloppe poreuse (P),
- au moins une tubulure d'évacuation (V) du solide traité à l'extérieur de l'enveloppe (P).

L'enveloppe externe (R) contient la (ou les) enveloppes poreuses (P) enfermant la (ou les) couches minces (CM), le diffuseur (D), le collecteur (CL) et la ou les tubulures d'évacuation (V) du solide traité.

L'ensemble des tubulures d'admission (E) du gaz réactif, d'introduction (S) du solide et de récupération (C) des effluents est disposé sur une bride supérieure (Bs) qui vient fermer le réacteur en s'ajustant à une bride inférieure (Bi) qui reçoit des évidements correspondants respectivement au diffuseur (D), à la couche mince (CM) et au collecteur (CL).

On entend par évidement correspondant le fait que lorsque la bride supérieure est ajustée à la bride inférieure, les tubulures d'admission du gaz réactif (E) communiquent avec le diffuseur (D), la tubulure de récupération des effluents (C) communique avec le collecteur (CL), et les tubulures d'admission du solide à traiter (S) communiquent avec l'enveloppe poreuse (P).

Néanmoins un réacteur dans lequel les tubulures d'admission de gaz réactif (E) seraient implantées sur les parois latérales du réacteur reste parfaitement dans le cadre de l'invention.

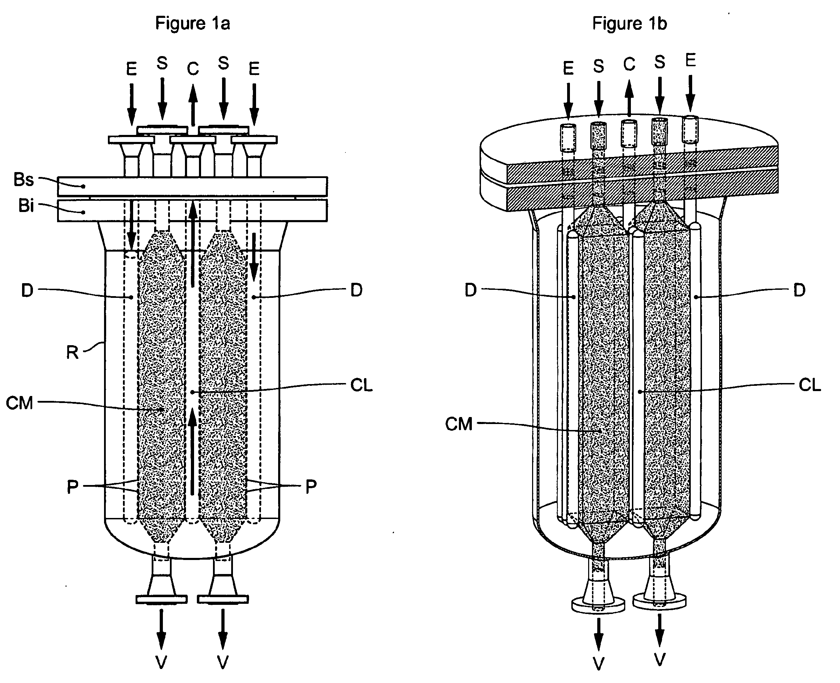

Le réacteur selon les figures 1a et 1b correspond à une configuration plane, c'est à dire qu'il est constitué de deux couches minces planes et parallèles.

Une description d'un réacteur en configuration plane comportant une pluralité de couches minces et destiné à des capacités de traitement supérieure à 500 kg de solide par module, est donnée dans la description détaillée au moyen des figures 2a, 2b,2c .

Le réacteur à couches minces selon l'invention fonctionne de manière discontinue en admettant des quantités de solide à traiter comprise entre 30 kg et 2500 kg, préférentiellement comprise entre 50 kg et 1000 kg, et de manière encore préférée comprise entre 100 kg et 500 kg, toutes ces quantités étant rapportées à un module.

L'invention consiste également en un procédé de réduction du catalyseur utilisant le réacteur selon l'invention, dans lequel la WH (abréviation de vitesse spatiale horaire) est comprise entre 0,5 et 5 Nlitres/h d'H2 par gramme de catalyseur, et préférentiellement comprise entre 1,5 et 3 Nlitres/h d'H2 par gramme de catalyseur.

La pression opératoire est comprise entre 1 et 10 bars absolus, et préférentiellement comprise entre 2 et 6 bars absolus. (1 bar = 10⁵ Pascal)

La température opératoire est comprise entre 200°C et 500°C, préférentiellement comprise entre 300°C à 450°C, et de manière encore plus préférée comprise entre 350°C 400°C.

Il est à noter que la température évolue au cours de l'opération de réduction du catalyseur selon une courbe pouvant comporter un ou plusieurs paliers appelés plateaux. La notion de température opératoire doit alors être comprise au sens de la température correspondant au dernier plateau de la courbe de montée en température.

L'épaisseur des couches minces de chaque module est calculée de manière à respecter une valeur voulue du rapport DP/z/Ps dans l'intervalle compris entre 0,1 et 10 m⁻¹ et préférentiellement compris entre 0,5 et 5m⁻¹.

Cette épaisseur est comprise entre 100 et 200 mm.

Toutes les couches minces d'un module donné ont la même épaisseur.

La largeur de chaque couche mince est généralement comprise entre 0,5 m et 4m.

La hauteur (ou longueur) de chaque couche mince est généralement comprise entre 0,5 m et 4m.

L'invention consiste également en une méthode de fonctionnement du réacteur selon l'invention consistant en 10 phases successives décrites succinctement ci dessous:
- phase 1 : Chargement du solide à traiter dans les doseurs amont Dam et balayage par un gaz inerte généralement de l'azote,
- phase 2 : Chargement du solide dans les modules par le moyen d'admission (S),
- phase 3: Balayage du ou des modules chargés par un gaz inerte, généralement de l'azote,
- phase 4 : Traitement des modules chargés sous H2 dilué à l'azote, à pression fixée, et en respectant une rampe de température comprise entre 0,5 et 5°C/minute,
- phase 5 : Traitement des modules chargés sous H2, à température et pression fixée, pendant une durée fixée (paliers de 4 à 20 heures),
- phase 6 : Balayage du ou des modules après traitement au moyen d'un gaz inerte, généralement de l'azote,
- phase 7 : Déchargement du solide par le moyen d'évacuation (V) vers les doseurs aval (Dav).
- phase 8: refroidissement du solide traité jusqu'à une température comprise entre 100 et 150°C,
- phase 9: transfert du solide refroidi
   a) soit directement vers le réacteur de synthèse Fischer Tropsch,
   b) soit vers le mélangeur (Mj) et dans ce cas mélange du solide avec des cires paraffiniques de température de fusion voisines de 100°C sous balayage d'un gaz inerte, généralement de l'azote,
   c) soit vers une capacité intermédiaire,
- phase 10: transfert du solide éventuellement enrobé de cires dans les fûts (Bs) dans les cas b) et éventuellement c).

### RESCRIPTION DETAILLEE DE L'INVENTION

La description qui suit est faite au moyen des figures 2a, 2b, 2c correspondant à une configuration plane.

La présente invention consiste en un réacteur en lit fixe à couches minces constitué d'un ensemble de modules (M) similaires, fonctionnant en parallèle, et enfermés dans une enceinte commune constituant l'enveloppe (R) dudit réacteur.

Dans le présent cas particulier les modules sont identiques.

Ce réacteur est destiné à effectuer un traitement sur un solide catalytique présent dans le réacteur sous forme de fines particules de diamètre généralement compris entre 30 et 100 microns.

Ce traitement généralement appelé réduction par l'homme du métier, fait appel à un gaz réactif qui est de l'hydrogène éventuellement dilué dans un gaz inerte, généralement de l'azote, le taux de dilution pouvant être quelconque mais se situant préférentiellement entre 25% et 35% en volume. Chaque module (M) du réacteur est constitué d'un ensemble comportant:
- au moins une enveloppe (P) en partie poreuse enfermant chaque couche mince (CM) de particules à traiter et possédant des moyens de communication avec l'extérieur du réacteur pour l'admission du solide, et des moyens distincts des précédents pour son évacuation de la dite enveloppe,
- un diffuseur (D) de gaz réactif attenant à la face poreuse d'entrée de l'enveloppe (P),
- un collecteur (Cl) d'effluents réactionnels attenant à la face poreuse de sortie de l'enveloppe (P),
- une tubulure d'admission (E) du gaz réactif dans le diffuseur (D), communiquant avec l'extérieur du réacteur,
- une tubulure de récupération (C) des effluents réactionnels communiquant avec l'extérieur du réacteur,
- une tubulure d'admission (S) du solide à traiter à l'intérieur de l'enveloppe poreuse (P),
- une tubulure d'évacuation (V) du solide traité à l'extérieur de l'enveloppe poreuse (P), L'ensemble des modules (M) est agencé à l'intérieur du réacteur (R) de manière à former un ensemble compact et certains modules peuvent être fermés pendant que le réacteur est en fonctionnement.

Par ensemble compact on entend que les modules (M) sont disposés de manière parallèle et alignés selon un même axe sensiblement vertical.

L'expression "certains modules peuvent être fermés pendant que le réacteur est en fonctionnement" signifie que le réacteur peut fonctionner avec un nombre réduit de modules, les modules "fermés" étant généralement vides de solide.

L'enveloppe poreuse (P) est généralement constituée d'une grille entourant les faces externe et interne de chaque couche mince avec des dimensions de maille généralement comprise entre 1 et 20 microns, et préférentiellement comprise entre 5 et 10 microns. Ces grilles sont généralement des média poreux tels que ceux utilisés dans la fabrication de cartouches filtrantes.

Le matériau utilisé pour les grilles peut être de type inconel ou en acier inoxydable (par exemple de type SS 316L). Ce type de média est en général obtenu par sintérisation. Il présente une bonne résistance au colmatage en profondeur.

Ce média est supporté par une plaque perforée, une grille ou tout autre moyen lui assurant une rigidité suffisante.

L'ensemble des tubulures d'admission des réactifs (E), d'introduction (S) du solide à traiter et de récupération des effluents (C) se trouve généralement disposé d'un même côté de l'enceinte (R) du réacteur, et l'ensemble des évacuations (V) du solide traité se trouve généralement du côté opposé de l'enceinte (R) du réacteur.

L'ensemble des tubulures d'admission (E) du gaz réactif, d'introduction (S) du solide et de récupération (C) des effluents est généralement disposé sur une bride supérieure (notée Bs sur la figure 2a) qui vient fermer la partie supérieure du réacteur en s'ajustant à une bride inférieure ( notée Bi sur la figure 2a) qui reçoit des évidements correspondants respectivement au diffuseur (D), à la couche mince (CM) et au collecteur (CL).

De manière préférée, les tubulures d'admission (E) du réactif et de récupération (C) des effluents sont situées d'un même côté du module. Néanmoins, un module dans lequel la tubulure d'admission (E) du réactif et la tubulure de récupération (C) de l'effluent réactionnel seraient situées sur des côtés opposés ferait encore partie de l'invention.

La tubulure d'admission (S) du solide à traiter dans le module considéré est située du côté où se trouvent les tubulures d'admission (E) des réactifs, et la tubulure d'évacuation (V) du solide traité est située du côté opposé.

Sur la figures 2, on a représenté une admission du solide par la partie supérieure (haut du réacteur) et une évacuation du solide traité par la partie inférieure (bas du réacteur).

La face externe de la couche mince est en communication avec le diffuseur (D) de forme également annulaire entourant ladite couche mince sur l'ensemble de sa surface latérale externe.

Ce diffuseur (D) permet la distribution du gaz réactif sur l'ensemble de la surface latérale externe de la couche mince.

La face interne de la couche mince est en communication avec un collecteur (C), dit collecteur central, puisqu'il a la forme d'un cylindre qui reçoit l'effluent réactionnel collecté sur l'ensemble de la surface latérale interne de la couche mince de solide.

L'épaisseur de la couche annulaire est généralement comprise entre 10 et 500 mm, préférentiellement comprise entre 50 mm et 300 mm, et de manière encore préférée comprise entre 100 et 200 mm.

Pour réduire le temps de séjour de l'eau produite, le rapport DP/z/Ps est compris entre 0,1 et 10 m⁻¹, et préférentiellement compris entre 0,5 m⁻¹ à 5 m⁻¹.

Le nombre de modules contenus dans le réacteur est généralement compris entre 2 et 20, et préférentiellement compris entre 4 et 12.

Un module, par exemple le module M1 est constitué d'un diffuseur D1, d'une première couche mince (CM1), et d'un collecteur central (CL1) et d'une seconde couche mince CM1.

Le diffuseur (D2) du module voisin M2 alimente donc en gaz réactif à la fois la seconde couche mince du module M1, et la première couche mince du module M2. Les notions de première et seconde couche mince sont purement arbitraires et correspondent à une lecture de gauche à droite de la figure 2.

La hauteur des modules est la même, et leur largeur est limitée de manière à former un ensemble rectangulaire tel que représenté sur la figure 2b qui est une vue de dessus de la figure 2a.

Un ensemble de modules de largeur différente tel que représenté en vue de dessus sur la figure 2c reste parfaitement dans le cadre de la présente invention.

La collecte des effluents est réalisée pour chaque module par le collecteur central du module concerné, par exemple par le collecteur CL1 pour le module M1.

L'évacuation du solide de chaque module peut se faire dans un réservoir (V) propre à chaque module ou commun à l'ensemble des module comme cela est représenté sur la figure 2a.

Un module de géométrie plane, a une hauteur généralement comprise entre 0,5 m et 4 m, et une largeur généralement comprise entre 0,5 m et 4 m.

L'épaisseur de la couche mince est généralement comprise entre 10 et 500 mm, préférentiellement comprise entre 50 et 300 mm, et de manière encore préférée comprise entre100 mm et 200 mm.

Le nombre de modules contenus dans le réacteur est généralement compris entre 2 et 20, et préférentiellement compris entre 4 et 12.

Le gaz réactif est constitué d'un mélange d'hydrogène et d'azote, le taux de dilution à l'azote (c'est à dire le pourcentage volumique d'azote dans le mélange) étant préférentiellement compris entre 25% et 35 % en volume.

Généralement, l'hydrogène utilisé a une teneur maximale en oxygène de 50 ppm, préférentiellement inférieure à 10 ppm, de manière encore préférée inférieure à 2 ppm.

L'hydrogène utilisé a une teneur en CO inférieur à 50 ppm, préférentiellement inférieure à 10 ppm, de manière encore préférée inférieure à 1 ppm, et une teneur en CO2 inférieure à 1000 ppm, préférentiellement inférieure à 150 ppm, de manière encore préférée inférieure à 20 ppm.

Il est possible d'admettre dans l'hydrogène une certaine quantité d'hydrocarbures légers à nombre d'atomes de carbone allant de 1 à 4, généralement du méthane. La teneur maximale en hydrocarbures est inférieure à 15 % vol, de préférence inférieure à 5 % vol, et de manière plus préférée inférieure à 1% vol.

Le point de rosée de l'hydrogène est généralement compris entre -60°C et 0° C, de manière préférée compris entre -50°C et -30°C, et de manière encore plus préférée compris entre -50°C et -40°C.

De manière préférée, l'hydrogène avant sa dilution à l'azote a un niveau de pureté supérieur à 99,95 % en volume.

La VVH du réacteur, sensiblement identique sur chaque module, est généralement comprise entre 0,5 et 5 Nlitres/h d'H2 par gramme de catalyseur, et préférentiellement comprise entre 1,5 et 3 Nlitres/h d'H2 par gramme de catalyseur.

La quantité de catalyseur contenu dans un module est généralement comprise entre 30 kg et 2500 kg, préférentiellement comprise entre 50 et 1000 kg, et de manière encore préférée comprise entre 100 et 500 kg.

La pression à l'entrée du réacteur, comprise entre 1 et 10 bars absolus (1 bar =10⁵ Pascal), de préférence comprise entre 2 et 6 bars absolus.

La température maximale de réduction est comprise entre 200°C et 500°C, préférentiellement comprise entre 300°C et 450°C, et de manière encore préférée comprise entre 350°C et 400°C.

Cette température maximale de réduction doit être comprise comme la température du dernier palier dans la courbe de montée en température.

La montée en température lors de la réaction de réduction se fait généralement sous forme d'une succession de rampes et de paliers, la pente des rampes étant généralement comprise entre 0,5 et 5°C/minute. Les rampes séparant les divers paliers peuvent être différentes tout en restant dans l'intervalle de 0,5 à 5°C/minute

Lorsque la température maximale est atteinte, le plateau correspondant à ladite température maximale peut avoir une durée comprise entre 4 heures et 20 heures, et préférentiellement comprise entre 8 heures et 16 heures.

### EXEMPLE SELON L'INTENTION

Le réacteur selon l'invention décrit ci après est destiné à effectuer la réduction d'un catalyseur à base de cobalt avant son utilisation comme catalyseur de synthèse Fischer Tropsch.

La quantité de catalyseur à traiter est de 80 kg.

Le catalyseur est sous forme de particules de diamètre compris entre 30 et 90 microns.

Le gaz réducteur est de l'hydrogène à 99,9 % de pureté, dilué à 30% volume dans de l'azote.

Les conditions opératoires de la réduction sont:
Pression (Ps): 4,0 bars absolus
Température du dernier plateau (T): 400°C
VVH: 2 Nl/heure par gramme de solide à traiter

Le réacteur est constitué de 2 modules identiques, les dimensions de chaque module étant les suivantes:
épaisseur: 160 mm
largeur: 300 mm
hauteur: 800 mm

Les modules sont disposés verticalement et de manière parallèle et sont enfermés dans une enceinte cylindrique de hauteur 1200 mm et de diamètre externe 600 mm.

Chaque module tel que représenté sur la figure 2 est constitué de deux couches minces identiques (CM1) alimentée chacune par un diffuseur (D1) et (D2) et possédant un collecteur d'effluent commun (CL1). Le diffuseur D2 alimente à la fois la couche mince attenante du premier module et la couche mince attenante du second module.

Chaque couche mince est enfermée par une paroi qui sur les plans latéraux (correspondants à la largeur et à la hauteur de ladite couche mince) est constituée d'une grille avec une maille de 5 microns.

Le rapport DP/z/Ps a une valeur de: 0,66 m⁻¹

La suite des opérations pour une séquence complète peut être décrite de la manière suivante au moyen de la figure 3:
phase 1 : Chargement du solide à traiter dans les doseurs amont (Dam) et balayage à l'azote par la ligne (5),
phase 2 : Ouverture des vannes V2 et chargement du solide dans les modules du réacteur (R) par le moyen d'admission (S) au moyen de la ligne (2),
phase 3: Balayage du ou des modules chargés en solide au moyen d'azote, au moyen de la ligne (5).
phase 4 : Fermeture des vannes V2, Traitement des modules chargés en solide sous H2 (amené par la ligne (1), à pression de 4 bars absolus, et en respectant une rampe de température de 3°C/minute,
phase 5 : Traitement des modules chargés sous H2, à température de 400°C pendant une durée de 12 heures,
phase 6 : Balayage du ou des modules après traitement au moyen d'azote,
phase 7 : Ouverture des vannes (V3, V4) et déchargement du solide par le moyen d'évacuation (V) vers les doscurs aval (Dav) au moyen de la ligne (3),
phase 8: Refroidissement du solide traité jusqu'à une température de 100°C,
phase 9: Ouverture des vannes (V5) et transfert du solide refroidi vers le mélangeur (Mj) et, dans ce cas, mélange du solide avec des cires parafliniques de température de fusion voisines de 100°C sous balayage d'un gaz inerte, généralement de l'azote,
phase 10: Transfert du solide refroidi éventuellement enrobé de cires dans le fut (Bs) par ouverture de la vanne (V6).

## Revendications

1. Réacteur en lit fixe à couches minces destiné au traitement de particules solides de taille comprise entre 30 et 100 microns, le dit réacteur étant constitué d'un ensemble de modules (M) similaires fonctionnant en parallèle, enfermés dans une enceinte commune (R) constituant l'enveloppe dudit réacteur, chaque module (M) comportant:
- au moins une enveloppe en partie poreuse (P) enfermant chaque couche mince (CM) de particules et possédant des moyens de communication avec l'extérieur du réacteur pour l'admission du solide, et des moyens distincts des précédents pour son évacuation de la dite enveloppe,
- un diffuseur (D) de gaz réactif attenant à la face poreuse d'entrée de l'enveloppe poreuse (P),
- un collecteur (Cl) d'effluents attenant à la face poreuse de sortie de l'enveloppe poreuse (P),
- une tubulure d'admission (E) du gaz réactif dans le diffuseur (D), communiquant avec l'extérieur du réacteur
- une tubulure de collecte (C) des effluents réactionnels communiquant avec l'extérieur du réacteur,
- une tubulure d'admission (S) du solide à traiter à l'intérieur de l'enveloppe poreuse (P),
- une tubulure d'évacuation (V) du solide traité vers l'extérieur de l'enveloppe poreuse (P), l'ensemble des tubulures d'admission (E) du gaz, réactif, d'admission (S) du solide à traiter et de collecte (C) des effluents est disposé sur une bride supérieure (Bs) venant fermer la partie supérieure du réacteur, et
l'ensemble des modules (M) étant agencés à l'intérieur du réacteur (R) de manière à former un ensemble de géométrie plane, chaque module ayant une hauteur comprise entre 0,5 et 4 m, une largeur comprise entre 0,5 et 4 m, et une épaisseur de la couche mince de solide à traiter comprise entre 100 mm et 200 mm, le nombre de modules (M) étant compris entre 4 et 12.

2. Réacteur en lit fixe à couches minces selon la revendication 1, dans lequel enveloppe poreuse (P) de chaque module est constituée d'une grille de forme plane possédant des mailles de dimension comprise entre 1 et 20 microns, et préférentiellement comprise entre 5 et 10 microns.

3. Procédé de réduction à l'hydrogène d'un catalyseur utilisé pour la synthèse Fischer Tropsch utilisant le réacteur selon la revendication 1, dans lequel le rapport de la perte de charge linéaire à la traversée de la couche mince (DP/z) sur la pression en sortie de ladite couche mince (Ps) est compris entre 0,1 et 10 m⁻¹ et préférentiellement compris entre 0,5 m⁻¹ et 5 m⁻¹.

4. Procédé de réduction à l'hydrogène d'un catalyseur utilisé pour la synthèse Fischer Tropsch selon la revendication 3, dans lequel la quantité de solide à traiter par module de réacteur est comprise entre 100 et 500 kg.

5. Procédé de réduction à l'hydrogène d'un catalyseur utilisé pour la synthèse Fischer Tropsch selon la revendication 3, dans lequel la VVH est comprise entre 0,5 et 5 Nlitres/h d'H2 par gramme de catalyseur, et préférentiellement comprise entre 1,5 et 3 Nlitres/h d'H2 par gramme de catalyseur.

6. Procédé de réduction à l'hydrogène d'un catalyseur utilisé pour la synthèse Fischer Tropsch selon la revendication 3,dans lequel la température maximale de la réduction est comprise 300°C et 450°C, et préférentiellement comprise entre 350°C et 400°C.

7. Procédé de réduction à l'hydrogène d'un catalyseur utilisé pour la synthèse Fischer Tropsch selon la revendication 3, dans lequel la rampe suivie pour la montée en température du réacteur est comprise entre 1 et 5°C /minute.

8. Méthode d'opération du réacteur selon l'une quelconque des revendications 1 à 2, comprenant 10 phases successives:
phase 1 : Chargement du solide à traiter dans les doseurs amont Dam et balayage par un gaz inerte généralement de l'azote,
phase 2 : Chargement du solide dans les modules par le moyen d'admission (S),
phase 3 :Balayage du ou des modules chargés par un gaz inerte, généralement de l'azote,
phase 4 :Traitement des modules chargés sous H2 dilué à l'azote, à pression fixée, et en respectant une rampe de température comprise entre 0,5 et 5°C/minute,
phase 5 : Traitement des modules chargés sous H2, à température et pression fixée, pendant une durée fixée (paliers de 4 à 20 heures),
phase 6 : Balayage du ou des modules après traitement au moyen d'un gaz inerte, généralement de l'azote,
phase 7 : Déchargement du solide par le moyen d'évacuation (V) vers les doseurs aval (Dav),
phase 8: Refroidissement du solide traité jusqu'à une température comprise entre 100 et 150°C,
phase 9: Transfert du solide refroidi
a) soit directement vers le réacteur de synthèse Fischer Tropsch,
b) soit vers le mélangeur (Mj) et, dans ce cas, mélange du solide avec des cires paraffiniques de température de fusion voisines de 100°C sous balayage d'un gaz inerte, généralement de l'azote,
c) soit vers une capacité intermédiaire,
phase 10: transfert du solide éventuellement enrobé de cires dans les fûts (Fs) dans les cas b) et éventuellement c).

## Patentansprüche

1. Dünnschicht-Festbettreaktor, der zur Bearbeitung von festen Partikeln mit einer Größe im Bereich zwischen 30 und 100 Mikron bestimmt ist, wobei der Reaktor aus einer Gesamtheit von ähnlichen, parallel arbeitenden Modulen (M) besteht, die von einem gemeinsamen Gehäuse (R) umschlossen sind, das die Hülle des Reaktors bildet, wobei jedes Modul (M) Folgendes umfasst:
- mindestens eine teilweise poröse Hülle (P), die jede Dünnschicht (CM) aus Partikeln umschließt und Mittel zur Kommunikation mit der Umgebung des Reaktors für die Zufuhr des Feststoffs und Einrichtungen, die von den vorhergehenden verschieden sind, für seine Ableitung aus der Hülle besitzt,
- einen Diffusor (D) für reaktives Gas, angrenzend an die poröse Eingangsseite der porösen Hülle (P),
- einen Sammler (Cl) für Abflüsse, angrenzend an die poröse Ausgangsseite der porösen Hülle (P),
- eine Leitung zum Zuführten (E) des reaktiven Gases in den Diffusor (D), die mit der Umgebung des Reaktors kommuniziert,
- eine Leitung zum Sammeln (C) der Reaktionsabflüsse, die mit der Umgebung des Reaktors kommuniziert,
- eine Leitung zum Zuführen (S) des zu bearbeitenden Feststoffs ins Innere der porösen Hülle (P),
- eine Leitung zum Ableiten (V) des bearbeiteten Feststoffs in die Umgebung der porösen Hülle (P), wobei die Gesamtheit der Leitungen zum Zuführen (E) des reaktiven Gases, zum Zuführen (S) des zu bearbeitenden Feststoffs und zum Sammeln (C) der Abflüsse auf einem oberen Flansch (Bs) angeordnet ist, der den oberen Teil des Reaktors schließt, und
wobei die Gesamtheit der Module (M) im Innern des Reaktors (R) derart angeordnet ist, dass sie eine Gesamtheit mit planarer Geometrie bildet, wobei jedes Modul eine Höhe im Bereich zwischen 0,5 und 4 m, eine Breite im Bereich zwischen 0,5 und 4 m und eine Dicke der Dünnschicht des zu bearbeitenden Feststoffs im Bereich zwischen 100 mm und 200 mm aufweist, wobei die Anzahl der Module (M) im Bereich zwischen 4 und 12 liegt.

2. Dünnschicht-Festbettreaktor nach Anspruch 1, wobei die poröse Hülle (P) jedes Moduls aus einem Gitter mit planarer Form besteht, das Maschen mit einer Abmessung im Bereich zwischen 1 und 20 Mikron und bevorzugt im Bereich zwischen 5 und 10 Mikron besitzt.

3. Verfahren zur Wasserstoffreduktion eines Katalysators, der für die Fischer-Tropsch-Synthese verwendet wird, bei dem der Reaktor nach Anspruch 1 eingesetzt wird, wobei das Verhältnis des linearen Druckverlusts beim Durchqueren der Dünnschicht (DP/z) zum Druck am Ausgang der Dünnschicht (Ps) im Bereich zwischen 0,1 und 10m⁻¹ und vorzugsweise im Bereich zwischen 0,5 m⁻¹ und 5 m⁻¹ liegt.

4. Verfahren zur Wasserstoffreduktion eines Katalysators, der für die Fischer-Tropsch-Synthese eingesetzt wird, nach Anspruch 3, wobei die Menge an zu bearbeitendem Feststoff je Reaktormodul im Bereich zwischen 100 und 500 kg liegt.

5. Verfahren zur Wasserstoffreduktion eines Katalysators, der für die Fischer-Tropsch-Synthese eingesetzt wird, nach Anspruch 3, wobei die HSV im Bereich zwischen 0,5 und 5 NLiter/h H2 je Gramm Katalysator und vorzugsweise im Bereich zwischen 1,5 und 3 NLiter/h H2 je Gramm Katalysator liegt.

6. Verfahren zur Wasserstoffreduktion eines Katalysators, der für die Fischer-Tropsch-Synthese eingesetzt wird, nach Anspruch 3, wobei die maximale Reduktionstemperatur im Bereich zwischen 300 °C und 450 °C und vorzugsweise im Bereich zwischen 350 °C und 400 °C liegt.

7. Verfahren zur Wasserstoffreduktion eines Katalysators, der für die Fischer-Tropsch-Synthese eingesetzt wird, nach Anspruch 3, wobei die für den Temperaturanstieg des Reaktors eingehaltene Rampe im Bereich zwischen 1 und 5 °C/Minute liegt.

8. Betriebsverfahren des Reaktors nach einem der Ansprüche 1 bis 2, das 10 aufeinander folgende Phasen umfasst:
Phase 1: Laden des zu bearbeitenden Feststoffs in die stromaufwärtigen Dosierer Dam und Spülen mit einem inerten Gas, im Allgemeinen Stickstoff,
Phase 2: Laden des Feststoffs in die Module mit der Zufuhreinrichtung (S),
Phase 3: Spülen des oder der Module, die mit einem inerten Gas, im Allgemeinen Stickstoff, gefüllt sind,
Phase 4: Bearbeiten der gefüllten Module unter H2, verdünnt mit Stickstoff, bei einem festgelegten Druck, und unter Einhaltung einer Temperaturrampe im Bereich zwischen 0,5 und 5 °C/Minute,
Phase 5: Bearbeiten der gefüllten Module unter H2 bei einer festgelegten Temperatur und einem festgelegten Druck für eine festgelegte Dauer (Stufen von 4 bis 20 Stunden),
Phase 6: Spülen des oder der Module nach Bearbeitung mittels eines inerten Gases, im Allgemeinen Stickstoff,
Phase 7: Entladen des Feststoffs durch die Ableitungseinrichtung (V) zu den stromabwärtigen Dosierern (Dav),
Phase 8: Abkühlen des bearbeiteten Feststoffs bis auf eine Temperatur im Bereich zwischen 100 und 150 °C,
Phase 9: Übertragen des abgekühlten Feststoffs
a) entweder direkt in den Fischer-Tropsch-Synthesereaktor,
b) oder in den Mischer (Mj) und in diesem Fall, Mischen des Feststoffs mit Paraffinwachsen mit einer Schmelztemperatur nahe an 100 °C unter Spülen mit einem inerten Gas, im Allgemeinen Stickstoff,
c) oder zu einem Zwischenlager,
Phase 10: Übertragen des gegebenenfalls mit Wachsen umhüllten Feststoffs in die Fässer (Fs) in den Fällen b) und gegebenenfalls c).

## Claims

1. A fixed bed reactor with thin layers intended for the treatment of solid particles with a size in the range 30 to 100 microns, said reactor being constituted by an assembly of similar modules (M) operating in parallel, enclosed in a common vessel (R) constituting the envelope of said reactor, each module (M) comprising:
- at least one partially porous envelope (P) enclosing each thin layer (CM) of particles and having communication means with the outside of the reactor for admission of solid, and means distinct from the preceding means for its evacuation from said envelope;
- a diffuser (D) for reagent gas coupled to the porous inlet face of the porous envelope (P);
- a collector (Cl) for effluents coupled to the porous outlet face of the porous envelope (P);
- a pipe (E) for admitting reagent gas into the diffuser (D), communicating with the exterior of the reactor;
- a pipe (C) for recovering reaction effluents communicating with the exterior of the reactor;
- a pipe (S) for admitting solid to be treated into the porous envelope (P);
- a pipe (V) for evacuating treated solid outside the porous envelope (P);
- the assembly of pipes (E) for admission of reagent gas, pipe (S) for admission of solid to be treated and pipe (C) for collecting effluents is disposed on an upper flange (Bs) which will close the upper portion of the reactor, and
the set of modules (M) being arranged inside the reactor (R) so as to form an assembly with a planar geometry, each module having a height in the range 0.5 to 4 m, a width in the range 0.5 to 4 m, and a thickness of the thin layer of solid to be treated in the range 100 mm to 200 mm and the number of modules (M) being in the range 4 to 12.

2. A fixed bed reactor with thin layer according to claims 1, in which the porous envelope (P) of each module is constituted by a screen with a planar form having a mesh with a dimension in the range 1 to 20 microns, preferably in the range 5 to 10 microns.

3. A process for the reduction by hydrogen of a catalyst used in the Fischer Tropsch synthesis using the reactor according to claim 1, in which the ratio of the linear pressure drop across the thin layer (DP/z) over the pressure at the outlet from said thin layer (Ps) is in the range 0.1 m⁻¹ to 10 m⁻¹ and preferably in the range 0.5 m⁻¹ to 5 m⁻¹.

4. A process for the reduction by hydrogen of a catalyst used in the Fischer Tropsch synthesis according to claim 3, in which the quantity of solid to be treated contained in each module (M) constituting the reactor is in the range 100 to 500 kg.

5. A process for the reduction by hydrogen of a catalyst used in the Fischer Tropsch synthesis according to claim 3, in which the HSV is in the range 0.5 to 5 Nlitres/h of H₂ per gram of catalyst, preferably in the range 1.5 to 3 Nlitres/h of H₂ per gram of catalyst.

6. A process using hydrogen to reduce a catalyst used for Fischer-Tropsch synthesis, according to claim 3, in which the maximum temperature of the reduction is in the range 300°C to 450°C, preferably in the range 350°C to 400°C.

7. A process using hydrogen to reduce a catalyst used for Fischer-Tropsch synthesis, according to claim 3, in which the ramp-up followed for the reactor temperature rise is in the range 1°C to 5°C/minute.

8. A method for operating a reactor in accordance with claims 1 to 2, comprising 10 phases in succession:
- phase 1: charging solid to be treated into upstream metering devices (Dam) and flushing with an inert gas, generally nitrogen;
- phase 2: charging solid into the modules via the admission means (S);
- phase 3: flushing the charged module or modules with an inert gas, generally nitrogen;
- phase 4: treatment of charged modules with H₂ diluted with nitrogen, at a fixed pressure, and following a temperature ramp-up rate in the range 0.5°C to 5°C/minute;
- phase 5: treatment of charged modules in H₂, at fixed temperature and pressure, for a fixed period (stages of 4 to 20 hours);
- phase 6: flushing of module or modules after treatment using an inert gas, generally nitrogen;
- phase 7: discharge of solid using evacuation means (V) to the downstream metering devices (Dav);
- phase 8: cooling treated solid to a temperature in the range 100°C to 150°C;
- phase 9: transfer of cooled solid;
- either directly to the Fischer-Tropsch synthesis reactor;
- or to the mixer (Mj) and in this case mixing the solid with paraffin waxes with a melting point of close to 100°C with a flush of an inert gas, generally nitrogen;
- or to an intermediate capacity;
- phase 10: transfer of solid which may have been coated with waxes into barrels (Bs) in case b) and possibly c).
